Europäisches Patentamt

European Patent Office

Office européen des brevets

(11) Veröffentlichungsnummer: **0 287 827 B1**

(12) **EUROPÄISCHE PATENTSCHRIFT**

(45) Veröffentlichungstag der Patentschrift: **09.12.92**

(51) Int. Cl.5: **G08B 13/18**, G08G 1/04

(21) Anmeldenummer: **88104687.4**

(22) Anmeldetag: **23.03.88**

(54) **Verfahren zum Betrieb eines Pyrodetektors zur Detektion und/oder zur Bestimmung der Geschwindigkeit eines bewegten Objekts.**

(30) Priorität: **24.04.87 DE 3713795**

(43) Veröffentlichungstag der Anmeldung:
**26.10.88 Patentblatt 88/43**

(45) Bekanntmachung des Hinweises auf die Patenterteilung:
**09.12.92 Patentblatt 92/50**

(84) Benannte Vertragsstaaten:
**CH DE FR GB IT LI**

(56) Entgegenhaltungen:
**US-A- 3 760 399**
**US-A- 4 225 786**
**US-A- 4 612 442**

(73) Patentinhaber: **SIEMENS AKTIENGESELL-SCHAFT**
**Wittelsbacherplatz 2**
**W-8000 München 2(DE)**

(72) Erfinder: **Meixner, Hans, Dr. Dipl.-Phys.**
**Max-Planck-Strasse 3**
**W-8013 Haar(DE)**
Erfinder: **Mader, Gerhard, Dr., Dipl.-Phys.**
**Hauptstrasse 47**
**W-8025 Unterhaching(DE)**
Erfinder: **Freitag, Reinhard, Dipl.-Ing. (FH)**
**Milbertshofener Strasse 131**
**W-8000 München 40(DE)**

## Beschreibung

Die vorliegende Erfindung bezieht sich auf ein Verfahren zur richtungsabhängigen Detektion und/oder Bestimmung der Geschwindigkeit eines bewegten Objekts, das gegenüber seiner Umgebung eine abweichende Temperatur hat.

Eine Detektion dient z.B. der Einbruchssicherung, wobei das Objekt der menschliche Körper ist. Die Bestimmung von Geschwindigkeiten findet z.B. im Zusammenhang mit Fahrzeugverkehr ihre Anwendung.

Für dieses Verfahren eignet sich bevorzugterweise die Verwendung eines Pyrodetektors nach der deutschen Offenlegungsschrift DE-A-3 616 374 (entspricht der europäischen Anmeldung EP-A-0 245 842).

Bei dem in diesem Patent beschriebenen Pyrodetektor handelt es sich um einen solchen, mit dem ohne Bewegung dieses Pyrodetektors richtungsabhängige Detektion durchgeführt werden kann. Mit diesem Pyrodetektor lassen sich Objekte, z.B. lebende Körper aber auch motorgetriebene Fahrzeuge, detektieren, die gegenüber der Umgebung eine abweichende Temperatur haben. Zum Beispiel wird in der US-Patentschrift (US-A-3 760 399, Schwarz) ein Detektor für Eindringlinge beschrieben, der mit in einer Ebene reihen-und zeilenförmig angeordneten Thermoelementen arbeitet. Diese Ebene, in der die Thermoelemente angeordnet sind, steht senkrecht auf der Richtung, in der Objekte detektiert werden sollen. Mit einer solchen Anordnung ist es nicht möglich, richtungsspezifische Detektion durchzuführen, respektive Geschwindigkeiten von Objekten ermitteln zu können. Die Art der Anordnung des Detektors in Bezug auf die vom Detektionsobjekt ausgehende Infrarotstrahlung und den zu beobachtenden Detektionsbereich in Verbindung mit der makroskopischen Ausdehnung der Sensoranordnung läßt nämlich eine Aussage bezüglich eines Eintrittswinkels des sich bewegenden Objektes in den Beobachtungsraum nicht zu. Sie erlaubt nur eine Aussage über die Geschwindigkeitskomponente senkrecht zu den Reihen der Sensorelemente.

Eine weitere US-Patentschrift (US-A-4 225 786, Perlman) beschreibt ein Infrarot-Detektions-System, bei dem pyroelektrische Detektionselemente verwendet werden. Diese Detektionselemente sind in Gruppen zusammengefaßt und in Form von gegenüberliegenden Kämmen verzahnt angeordnet. Die makroskopische Ausdehnung des Detektors und seine Anordnung in einer Fläche senkrecht zum Strahlengang, der vom bewegten Objekt ausgeht, lassen auch keine richtungsspezifische Detektion zu.

Eine andere US-Patentschrift (US-A-4 612 442, Toshimichi) beschreibt ein passives Infrarot-Detektions-System für Eindringlinge, das auf einem Parabolreflektor aus Facetten und einem pyroelektrischen Sensorelement basiert. Die Facetten des Reflektors zerhacken in Bezug auf den Sensor den Infrarotstrahlengang, der von einem bewegten Objekt im Erfassungsbereich des Reflektors ausgeht. Ein im Detektionsbereich bewegtes Objekt, das Infrarotstrahlen aussendet, bewirkt so am Sensor eine Impulsfolge von Infrarotstrahlen, die mit der Geschwindigkeit des Objektes im Detektionsbereich korrespondiert. Mit dieser Anordnung ist jedoch keine richtungsabhängige Detektion von Objekten möglich, da zu keinem Zeitpunkt bekannt ist, welche Facette des Reflektors aktuell ein Strahlenbündel auf den pyroelektrischen Sensor wirft.

In der europäischen Patentanmeldung EP-A-0 245 842 ist ein Pyrodetektor beschrieben, der einen Sensor besitzt, der auf Wärmestrahlung anspricht und der z.B. Polyvinylidendifluorid (PVDF) als Sensormaterial enthält. Dieser Pyrosensor ist in einen Hohlspiegel eingebaut, der sphärisch bis sphärisch-parabolische Form hat. Dieser Hohlspiegel besitzt einen Großkreis, in dessen Ebene der ebenfalls ebene Sensor bzw. die den Sensor bildende ebene Folie angeordnet ist. Im Bereich der Sensorfunktion, d.h. der Sensorelemente, ist diese Folie freitragend gehalten. In der Ebene des Großkreises, d.h. in der Ebene der Folie des Sensors sind die Sensorelemente in einem Bogen angeordnet. Die Folie mit diesen im Bogen angeordneten Sensorelementen ist in dem Spiegel somit so ausgerichtet, daß die Ebene dieses Bogens mit der Ebene des Großkreises des Spiegels zusammenfällt, die als die Detektorebene, d.h. als Mittellage des richtungsselektiven Detektorbereichs zu verstehen ist.

Aufgabe der vorliegenden Erfindung ist es, ein Verfahren anzugeben, das zur richtungsabhängigen Detektion und/oder Bestimmung der Geschwindigkeit eines solchen bewegten Objekts geeignet ist, das gegenüber seiner Umgebung eine abweichende Temperatur hat. Insbesondere soll dieses Verfahren mit einem Detektor nach der europäischen Anmeldung EP-A-0 245 842 durchführbar sein.

Diese Aufgabe wird mit einem Verfahren gelöst, wie es im Patentanspruch 1 angegeben ist.

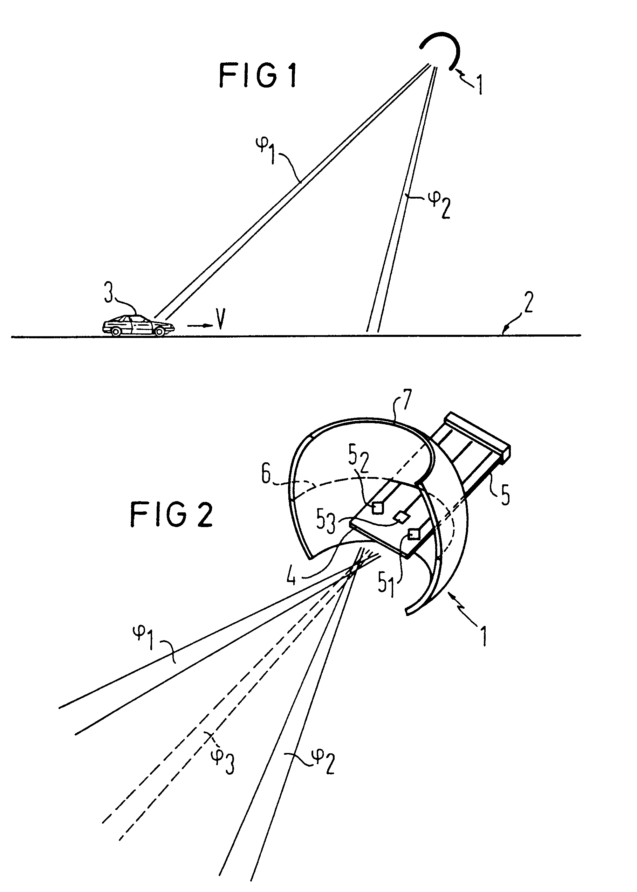

Der vorliegenden Erfindung liegt der Gedanke zugrunde, die zur Lösung der Aufgabe notwendige Detektion des Objekts mit Hilfe eines Pyrodetektors, insbesondere eines solchen nach dem Prinzip der Anmeldung EP-A-0 245 842, der für richtungssensitive Detektion geeignet ist, durchzuführen. Dabei wird der Pyrodetektor so angeordnet, daß die Wärmestrahlung des auf seiner Bahn bewegten Objekts, dessen Anwesenheit und/oder dessen Geschwindigkeit detektiert werden soll, in den Pyrodetektor derart einfällt, daß dieser Strahlungseinfall in zeitlich aufeinanderfolgend unterschiedlichen Richtungen der oben erwähnten Detektorebene erfolgt. Damit dieser zeitlich in aufeinanderfolgend unterschiedlichen Richtungen auftretende Einfall der Wärmestrahlung des Objekts erfolgt, ist der Detektor zu der Bewegungsbahn des Objekts also so ausgerichtet, daß der Richtungsselektivität $\phi$ des verwendeten Pyrodetektors entsprechend aufeinanderfolgend voneinander verschiedene Sensorelemente des Sensors des Pyrodetektors mit der Strahlung beaufschlagt werden. Zur Erläuterung hierzu zeigt Figur 1 das allgemeine Schema der Anordnung des Pyrodetektors 1 zur Bewegungsbahn 2 z.B. eines Personenwagens 3 als Objekt, dessen Geschwindigkeit detektiert werden soll. Figur 2 zeigt dazu im Detail die Anordnung des Pyrodetektors z.B. eines solchen nach dem Patent 36 16 374, und zwar die Lage der Ebene 4 des Sensors 5 und des Großkreises 6 des Hohlspiegels 7 des Pyrodetektors 1. Die Ebene 4 ist auch die Ebene der Detektionswinkel $\phi1$, $\phi2$ (und $\phi3$) der Figur 1. Genaugenommen handelt es sich wegen der begrenzten Winkelauflösung eines solchen Sensorelements jeweils um differentielle Bereiche der mittleren Winkelrichtungen $\phi1$, $\phi2$ .....

Der genannte Pyrodetektor wird in der Weise verwendet, daß für den Winkel $\phi1$ ein erstes 5,1 richtungsselektiv wirksames Sensorelement des Sensors 5 des Pyrodetektors 1 entsprechend der Ausrichtung mit detektierter Strahlung des Objekts 3 beaufschlagt ist. Für den Winkel $\phi2$ ist ein anderes Sensorelement 5,2 des Sensors 5 dieses Pyrodetektors 1 wirksam, wie dies aus der Figur 2 ersichtlich hervorgeht.

Soll blosse Detektion eines Objekts durchgeführt werden, genügt an sich allein die Detektion der Wärmestrahlung. Um aber erhöhte Fehlersicherheit zu erreichen, ist es vorteilhaft auch eine Bewegung dieses Objekts zu detektieren, d.h. festzustellen, daß sich dieses Objekt im Raum vor dem Detektor bewegt und nicht lediglich eine hinsichtlich der beabsichtigten Detektion uninteressante Quelle für Infrarotstrahlung, z.B. eine Glühlampe, wirksam ist.

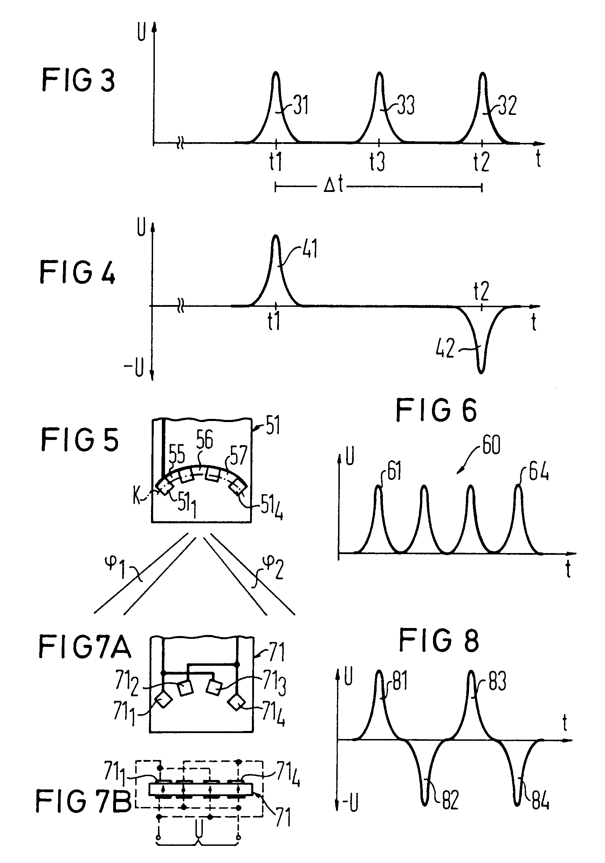

Eine erste Ausführungsform der Erfindung besteht darin, bei entsprechend vorgegebener Bemessung der gesamten Anordnung (Winkel $\phi1$ und $\phi2$, Abstand des Pyrodetektors 1 von der Bewegungsbahn 2, z.B. der Fahrbahn) die Geschwindigkeit v, z.B. des Personenwagens 3, zu ermitteln, der zum Zeitpunkt t1 (s. Fig. 3) in der Detektionsrichtung $\phi1$ und im Zeitpunkt t2 in der Detektionsrichtung $\phi2$ erfaßt wird. Der Pyrodetektor des obengenannten Patentes kann so betrieben werden, daß jedes einzelne Sensorelement 5,1; 5,2 ... für sich abgefragt werden kann, d.h. jedes Sensorelement des Sensors in wie im obengenannten Patent beschriebenerweise einen eigenen Eingangsverstärker besitzt, d.h. an verschiedenen Ausgängen in der Auswerteschaltung von diesen Sensorelementen erzeugte Signale getrennt zu erhalten sind.

Eine Verbesserung des erfindungsgemäßen Verfahrens ist dadurch zu erzielen, daß man noch ein drittes Sensorelement 5,3 mit der in Figur 2 gestrichelt angegebenen Richtung $\phi3$ zur Detektion mit heranzieht.

Figur 3 zeigt zu dieser ersten Ausführungsform über der Zeitachse t aufgetragen drei aufeinanderfolgende Spannungsimpulse 31, 32 und 33. Den Spannungsimpuls 31 liefert der Pyrodetektor, wenn sein der Richtung $\phi1$ entsprechendes Sensorelement 5,1 des Sensors 5 mit Wärmestrahlung des Objekts 3 beaufschlagt wird. Im Fall der Figur 1 ist dies der Zeitpunkt t1, wenn der Personenwagen in dieser Richtung $\phi1$ des Sensors 5 erfaßt wird. Der Spannungsimpuls 32 tritt dann auf, wenn nach Figur 1 der Personenwagen in der Richtung $\phi2$ erfaßt wird. Aus dem Zeitabstand $\Delta t$ kann unter Berücksichtigung der übrigen geometrischen Verhältnisse ohne Schwierigkeiten und nach bekannten Verfahren die Geschwindigkeit ermittelt werden, mit der sich das Fahrzeug im Mittel im Winkelbereich $\phi2$ - $\phi1$, d.h. im Zeitraum t2 - t1, bewegt hat.

Die als Weiterbildung vorgesehene Detektion mit dem Winkel $\phi3$ bzw. der Spannungsimpuls 33 dient dazu, eine erhöhte Störsicherheit zu erreichen. Dieser dritte Impuls 33 ist hinsichtlich des Detektionsverfahrens vergleichbar mit den Impulsen 31 und 32. Seine Lage zwischen diesen beiden Spannungsimpulsen 31 und 32 entspricht der Lage des Winkel $\phi3$. Mit der Detektion des Impulses 33 wird sichergestellt, daß es sich tatsächlich um ein Fahrzeug handelt, das sich von dem Winkelbereich $\phi1$ über den Winkel $\phi3$ in den Winkelbereich $\phi2$ bewegt hat. Darüber hinaus zeigt die exakte Lage des Impulses 33 zwischen den Impulsen 31 und 32 an, ob und ggf. in welcher Richtung sich die Fahrzeuggeschwindigkeit zwischen den beiden Meßwinkeln $\phi1$ und $\phi2$ bzw. im Zeitintervall zwischen t1 und t2 geändert hat.

Der vorangehenden Beschreibung ist die Verwendung eines Pyrodetektors zugrundegelegt worden, dessen Sensorelemente 5, 1; 5,2; 5, 3 ... des Sensors 5 einzeln ansteuerbar sind. Außerdem ist Temperaturkompensation des Empfangssignals durch Maßnahmen bewirkt, die Bestandteil einer Ausführungsform eines Sensors nach dem Patent 36 16 374 sind. Auf eine derartige Temperaturkompensation kann aber auch verzichtet werden, wenn die zwei Sensorelemente 5,1 und 5,2 des Sensors des Pyrodetektors so geschaltet sind, daß diese beiden Sensorelemente zueinander gegensinnig polarisiert sind.

Figur 4 zeigt die den Winkeln $\phi1$ und $\phi2$ aus Figur 1 entsprechenden Spannungsimpulse 41 und 42, wie sie im Abstand t2 - t1 aufeinanderfolgend für die Detektion des Fahrzeugs festzustellen sind. In diesem Falle genügt es, die beiden einander entgegengesetzt gepolten Sensorelemente mit ein und demselben Eingangsverstärker zu verbinden, d.h. es ist nur ein Verstärker für diese zwei Sensorelemente erforderlich. Die Polarität des Impulses 41 bzw. 42 gibt an, welches der Sensorelemente 5, 1 oder 5, 2 augenblicklich ein Signal abgibt.

Ein Vorzug des Verfahrens entsprechend der Figur 4 ist, daß sich die Temperaturkompensation von selbst ergibt, d.h. sich die jeweiligen Gleichstromanteile der Signaldetektion kompensieren.

Die Figuren 5 und 7 zeigen spezielle Elektrodenkonfigurationen eines Sensors, wie sie alternativ für einen zu verwendenden Pyrodetektor, der nach dem Prinzip des Patents 36 16 374 aufgebaut ist, für die vorliegende Geschwindigkeitsdetektion verwendet werden können.

Die Figur 5 zeigt eine Elektrodenkonfiguration eines Sensors 51 mit Sensorelementen 51,1 bis 51,4, die miteinander parallel geschaltet sind, für das erfindungsgemäße Verfahren aber nur scheinbar ein einziges Sensorelement darstellen. Diese Sensorelemente 51,1 bis 51,4 sind räumlich durch die Abstände 55 bis 57 voneinander getrennt, die vergleichbar groß sind mit den entlang des Bogens K gemessenen Breiten der einzelnen Sensorelemente 51,1 bis 51,4. Diese Abstände und Breiten sind gleich groß oder größer als es der Winkelauflösung des Sensors 51 entspricht.

Wenn das Fahrzeug auf seiner Bahn den Detektionsbereich des wie schon oben beschrieben angeordneten Pyrodetektors durchläuft, werden die Sensorelemente 51,1 bis 51,4 in zeitlicher Folge nacheinander mit der Strahlung des Fahrzeugs beaufschlagt. Entsprechend ergibt sich die aus Figur 6 ersichtliche Spannungsimpulsfolge 60, deren Zeitabstände von Impuls zu Impuls der Fahrzeuggeschwindigkeit entsprechend groß ist. Hieraus ist auch ersichtlich, welche Bedeutung die Zwischenabstände 55 bis 57 haben, da diese zu deutlich voneinander unterscheidbaren Impulsen 61 bis 64 der Impulsfolge 60 der Figur 6 führen.

Die Figur 7a zeigt in Aufsicht und die Figur 7b dazu in Frontansicht eine Elektrodenkonfiguration 71 mit vier Elektrodenpaaren, von denen einerseits die Elektroden 71,1 und 71,3 der Sensorelemente und andererseits die Elektroden 71,2 und 71,4 parallelgeschaltet, jedoch die beiden Parallelschaltungen zueinander entgegengesetzt gepolt sind, wie dies das Schema der Figur 7b zeigt. Bei einem mit den Figuren 1 und 2 vergleichbaren Durchlauf des Fahrzeugs 3 durch den Detektionsbereich eines Pyrodetektors mit einem Sensor 71 nach Figur 7, ergibt sich die in Figur 8 dargestellte Impulsfolge 80 mit den Impulsen 81 bis 84. Die entsprechend entgegengesetzt auftretenden Impulse 81 und 82 bzw. 83 und 84 entsprechen funktionsgemäß den Impulsen 41 und 42 der Figur 4. Da jedoch vier Elektrodenpaare bei der Anordnung nach Figur 7 vorgesehen sind, ergeben sich auch entsprechend vier Impulse mit paarweise zueinander entgegengesetzter Polarität.

**Patentansprüche**

1. Verfahren zur richtungsabhängigen Bestimmung der Geschwindigkeit eines bewegten Objekts, das gegenüber seiner Umgebung eine abweichende Temperatur hat,
   **gekennzeichnet dadurch,**
   daß ein Pyrodetektor (1) mit einem Sensor (5; 51; 71) verwendet wird, der wenigstens zwei Sensorelemente ($5_1$, $5_2$...; $51_1$, $51_2$, ...; $71_1$, $71_2$,...) aufweist, deren Anordnung in dem Sensor so gewählt ist, daß diese Sensorelemente unterschiedliche Detektionsrichtungen ($\phi 1$, $\phi 2$, ...) für in den Pyrodetektor einfallende Infrarot-Wärmestrahlung, bezogen auf eine vorgegebene Lage des Pyrodetektors haben
   daß die Detektionsrichtung der Sensorelemente so ausgerichtet wird, daß sie sich in einer Ebene (4) mit den Sensorflächen befindet, und
   daß zeitlich aufeinanderfolgende elektrische Sensorsignale (31,32,33; 41,42; 61 bis 64; 81 bis 84) ausgewertet werden.

2. Verfahren nach Anspruch 1,
   **gekennzeichnet dadurch,**
   daß die Zeitdifferenz (t2-t1) zwischen zwei im zeitlichen Abstand voneinander auftretenden Sensorsignalen (31, 32; 41, 42) ausgewertet wird.

3. Verfahren nach Anspruch 1 oder 2 ,
   **gekennzeichnet dadurch,**
   - daß mindestens drei Sensorelemente ($5_1$,$5_2$,$5_3$) verwendet werden, von denen jedes ein Sensorsignal liefert,
   - daß das dritte Sensorelement ($5_3$) derart angeordnet wird daß dessen Detektionsrichtung zwischen denen des ersten und zweiten Sensorelementes liegt,
   - daß das Sensorsignal (33) des dritten Sensorelementes als Kontrollsignal verwendet wird, um einen Bewegungsvorgang zu bestätigen der einen Wechsel der Detektion von dem ersten zu dem zweiten Sensorelement bewirkt hat, wobei ausgewertet wird, daß ein Objekt welches durch seine Bewegung diesen Wechsel der Detektion bewirkt hat, dazwischen auch eine Detektion am dritten Sensorelement bewirkt haben muß.

4. Verfahren nach einem der Ansprüche 1 bis 3, **gekennzeichnet dadurch,**
daß ein Sensor (5;51;71) verwendet ist, dessen benachbart angeordnete Sensorelemente derart polarisiert und/oder angeschlossen sind,
daß in dem Sensor benachbarte Sensorelemente einander entgegengesetzt polarisiertes elektrisches Detektorsignal (Fig.4, Fig.8) liefern.

5. Verfahren nach einem der Ansprüche 1 bis 4, **gekennzeichnet dadurch,**
daß ein Pyrodetektor verwendet ist, der
- einen Hohlspiegel (7) mit sphärischer bis sphärisch-parapolischer Form besitzt, wobei dieser Hohlspiegel (7) einen Großkreis (6) aufweist, mit dem eine den Pyrodetektor (1) schneidende Ebene bestimmt ist
und der
- einen Sensor (5; 50; 71) aufweist, der in dieser Ebene (4) des Großkreises (6) des Hohlspiegels (7) im Pyrodektor (1) angeordnet ist, wobei der Sensor eine pyroelektrisch wirksame Folie ist, die sich in der Ebene (4) erstreckt und auf bzw. in der entlang einem zum Großkreis (6) konzentrischen Kreisbogenstück (K) die Sensorelemente nebeneinanderliegend angeordnet sind.

6. Verfahren nach einem der Ansprüche 1 bis 5, **gekennzeichnet dadurch,**
daß ein Pyrodetektor mit solchen Sensorelementen ($51_1$ bis $51_4$) des Sensors (51) verwendet wird, bei dem diese Sensorelemente auf den Sensor (51) mit Abständen (55 bis 57) voneinander angeordnet und elektrisch parallel geschaltet sind.

7. Verfahren nach einem der Ansprüche 1 bis 5, **gekennzeichnet dadurch,**
daß ein Pyrodetektor mit solchen Sensorelementen ($71_1$ bis $71_4$) des Sensors (71) verwendet wird, bei dem alternierend aufeinanderfolgende Sensorelemente ($71_1$, $71_3$; $71_2$, $71_4$) jeweils elektrisch miteinander parallel geschaltet sind, so daß bei einheitlicher Polarisation des Materials der Folie des Sensors (71) die Strahlungs-Beaufschlagung benachbart aufeinanderfolgender Sensorelemente zu Detektorsignalen mit alternierender Polarität führt.

**Claims**

1. Method for the direction-dependent determination of the velocity of a moving object which has a varying temperature in relation to its environment, characterised in that a pyrodetector (1) is used, which has a sensor (5; 51; 71) which exhibits at least two sensor elements ($5_1$, $5_2$, ...; $51_1$, $51_2$, ...; $71_1$, $71_2$, ...), the arrangement of which in the sensor is selected so that these sensor elements have differing detection directions ($\phi 1$, $\phi 2$, ...) for infrared heat radiation incident into the pyrodetector, related to a predetermined position of the pyrodetector, in that the detection direction of the sensor elements is oriented so that it is situated in a plane (4) with the sensor surfaces, and in that temporaly successive electrical sensor signals (31, 32, 33; 41, 42; 61 to 64; 81 to 84) are evaluated.

2. Method according to Claim 1, characterised in that the time difference (t2-t1) between two sensor signals (31, 32; 41, 42) occurring with mutual temporal spacing is evaluated.

3. Method according to Claim 1 or 2, characterised in that
- at least three sensor elements ($5_1$, $5_2$, $5_3$) are used, each one of which delivers a sensor signal,
- the third sensor element ($5_3$) is disposed in such a manner that its detection direction lies between those of the first and second sensor element,
- the sensor signal (33) of the third sensor element is used as control signal, in order to confirm a movement process which has caused a change of the detection from the first to the second sensor element, it being evaluated that an object which has caused this change of the detection by its movement must also therebetween have caused a detection at the third sensor element.

4. Method according to one of Claims 1 to 3, characterised in that a sensor (5; 51; 71) is employed, the adjacently disposed sensor elements of which are polarised and/or connected in such a manner that sensor elements which are adjacent in the sensor deliver an electrical detector signal of mutually opposite polarity (Fig. 4, Fig. 8).

5. Method according to one of Claims 1 to 4, characterised in that a pyrodetector is used, which
- possesses a concave mirror (7) of spherical to spherical-parabolic shape, this concave mirror (7) exhibiting a great circle (6) by which a plane cutting the pyrodetector (1) is determined and which

- exhibits a sensor (5; 51; 71) which is disposed in this plane (4) of the great circle (6) of the concave mirror (7) in the pyrodetector (1), the sensor being a pyroelectrically active foil which extends in the plane (4) and on or in which the sensor elements are disposed side by side along a circular arc portion (K) concentric with the great circle (6).

6. Method according to one of Claims 1 to 5, characterised in that a pyrodetector with such sensor elements ($51_1$, to $51_4$) of the sensor (51) is used, in which these sensor elements are disposed on the sensor (51) with spacings (55 to 57) from one another and are electrically connected in parallel.

7. Method according to one of Claims 1 to 5, characterised in that a pyrodetector with such sensor elements ($71_1$ to $71_4$) of the sensor (71) is used, in which alternately successive sensor elements ($71_1$, $71_3$; $71_2$, $71_4$) are respectively electrically connected in parallel with one another, so that with uniform polarisation of the material of the foil of the sensor (71) the irradiation of adjacently successive sensor elements leads to detector signals of alternating polarity.

**Revendications**

1. Procédé pour déterminer, en fonction de la direction, la vitesse d'un objet mobile, qui possède une température différente de son environnement, caractérisé par le fait qu'on utilise un pyrodétecteur (1) comportant un capteur (5;51;71) qui possède au moins deux éléments de détection ($5_1$,$5_2$, ...; $51_1$, $51_2$, ...; $71_1$, $71_2$, ...), dont la disposition dans le capteur est choisie de telle sorte que ces éléments de détection possèdent des directions de détection différentes ($\phi$1, $\phi$2, ...) pour un rayonnement thermique infrarouge tombant sur le pyrodétecteur, par rapport à une position préterminée de ce dernier, qu'on oriente la direction de détection des éléments de détection de manière qu'elle se situe dans un plan (4) contenant les surfaces de détection et qu'on évalue des signaux électriques du capteur (31,32,33; 41,42; 61 à 64; 81 à 84) qui se succèdent dans le temps.

2. Procédé suivant la revendication 1, caractérisé par le fait qu'on évalue l'intervalle de temps (t2-t1) entre deux signaux (31,32;41,42) du capteur, qui apparaissent en étant séparés dans le temps.

3. Procédé suivant la revendication 1 ou 2, caractérisé par le fait
   - qu'on utilise au moins trois éléments de détection ($5_1$, $5_2$, $5_3$), dont chacun délivre un signal du capteur,
   - qu'on dispose le troisième élément de détection ($5_3$) de manière que sa direction de détection soit située entre celles des premier et second éléments de détection,
   - qu'on utilise le signal de détection (33) du troisième élément de détection en tant que signal de contrôle pour confirmer un mouvement de déplacement qui provoque une commutation de la détection du premier au second élément de détection, auquel cas on évalue le fait qu'un objet, qui a déclenché cette commutation de la détection sous l'effet de son déplacement, doit avoir également provoqué entre-temps une détection dans le troisième élément de détection.

4. Procédé selon l'une des revendications 1 à 3, caractérisé en ce
   qu'on utilise un capteur (5;51;71), dont les éléments de détection voisins les uns des autres sont polarisés et/ou raccordés de telle sorte
   que des éléments de détection voisins dans le capteur délivrent des signaux électriques de détection (figure 4, figure 8) qui possèdent des polarités réciproquement opposées.

5. Procédé suivant l'une des revendications 1 à 4, caractérisé par le fait
   qu'on utilise un pyrodétecteur qui
   - possède un miroir concave (7) possédant une forme allant de la forme sphérique à la forme sphérico-parabolique, ce miroir concave (7) possédant un grand cercle (6) qui détermine un plan recoupant le pyrodétecteur (1), et
   - possède un capteur (5;50;71), qui est disposé dans ce plan (4) du grand cercle (6) du miroir concave (7) dans le pyrodétecteur (1), le capteur étant une feuille active du point de vue pyroélectrique, qui est située dans le plan (4), les éléments de détection étant disposés côte-à-côte sur ou dans l'élément d'arc de cercle (K) concentrique au grand cercle (6).

6. Procédé suivant l'une des revendications 1 à 5, caractérisé par le fait qu'on utilise un pyrodétecteur possédant de tels éléments de dé-

tection ($51_1$ à $51_4$) du capteur (51), dans lequel ces éléments de détection sont disposés sur le capteur (1) en étant séparés par des distances réciproques (51 à 57) et sont branchés électriquement en parallèle.

7. Procédé suivant l'une des revendications 1 à 5, caractérisé en ce qu'on utilise un pyrodétecteur possédant de tels éléments de détection ($71_1$ à $71_4$) du capteur (71), dans lequel des éléments de détection ($71_1$, $71_3$; $71_2$, $71_4$), qui se succèdent d'une manière alternée, sont respectivement branchés électriquement en parallèle entre eux de sorte que, dans le cas d'une polarité uniforme du matériau de la feuille du capteur (71), la charge en rayonnement d'éléments de détection successifs voisins conduit à la production de signaux de détection ayant des polarités alternées.

FIG 1

FIG 2

FIG 3

FIG 4

FIG 5

FIG 6

FIG7A

FIG 8

FIG 7B